# EUROPÄISCHE PATENTSCHRIFT

(11) **EP 2 057 216 B1**
(45) Veröffentlichungstag und Bekanntmachung des Hinweises auf die Patenterteilung: **09.03.2011**
(21) Anmeldenummer: 07788540.8
(22) Anmeldetag: 27.08.2007
(51) Int. Cl.: C08K 3/22, C08K 9/02, C08K 9/04, C08K 9/06, C08K 9/08

(54) **TITANDIOXID ENTHALTENDES KOMPOSIT**
TITANIUM DIOXIDE-CONTAINING COMPOSITE
COMPOSITE CONTENANT DU DIOXYDE DE TITANE

(30) Priorität: 25.08.2006 DE 102006039856
(43) Veröffentlichungstag der Anmeldung: 13.05.2009
(73) Patentinhaber: Sachtleben Chemie GmbH, 47198 Duisburg (DE)
(72) Erfinder: GROTHE, Sonja, 46244 Bottrop (DE); FRITZEN, Petra, 47228 Duisburg (DE); WINKLER, Jochen, 47509 Rheurdt (DE); ROHE, Bernd, 46539 Dinslaken (DE)
(74) Vertreter: Uppena, Franz
(86) Internationale Anmeldenummer: PCT/EP2007/058896
(87) Internationale Veröffentlichungsnummer: WO 2008/023078

(56) Entgegenhaltungen:
- EP-A- 1 184 426
- EP-A- 1 571 180
- GB-A- 1 221 307
- JP-A- 2003 239 099

## Beschreibung

Gegenstand der Erfindung ist ein Titandioxid enthaltendes Komposit, ein Verfahren zu dessen Herstellung und die Verwendung dieses Komposits.

Aus der Anwendung von konventionellen Füllstoffen und Pigmenten, auch Additive genannt, in polymeren Systemen ist bekannt, dass die Art und die Stärke der Wechselwirkungen zwischen den Partikeln des Füllstoffs bzw. Pigments und der polymeren Matrix die Eigenschaften eines Komposits beeinflusst. Durch gezielte Oberflächenmodifizierung können die Wechselwirkungen zwischen den Partikeln und der polymeren Matrix modifiziert und somit die Eigenschaften des Systems aus Füllstoffen und Pigmenten in einer polymeren Matrix, im folgenden auch Komposit genannt. Eine übliche Art der Oberflächenmodifizierung ist die Funktionalisierung der Partikeloberflächen unter Verwendung von Alkoxyalkylsilanen. Die Oberflächenmodifizierung kann dazu dienen, die Verträglichkeit der Partikel mit der Matrix zu erhöhen. Darüber hinaus kann durch die geeignete Auswahl von funktionellen Gruppen auch eine Anbindung der Partikel an die Matrix erreicht werden.

Eine zweite Möglichkeit zur Verbesserung der mechanischen Eigenschaften von polymeren Materialien ist die Verwendung von ultrafeinen Partikeln. US-B-6 667 360 offenbart polymere Komposite, die 1 bis 50 Gew.-% Nanopartikel mit Partikelgrößen von 1 bis 100 nm enthalten. Als Nanopartikel werden Metalloxide, Metallsulfide, Metallnitride, Metallcarbide, Metallfluoride und Metallchloride vorgeschlagen, wobei die Oberfläche dieser Partikel unmodifiziert ist. Als polymere Matrix werden Epoxide, Polycarbonate, Silikone, Polyester, Polyether, Polyolefine, synthetischer Kautschuk, Polyurethane, Polyamid, Polystyrene, Polyphenylene Oxide, Polyketone und Copolymere sowie Mischung davon genannt. Die in US-B-6 667 360 offenbarten Komposite sollen im Vergleich zum ungefüllten Polymer verbesserte mechanische Eigenschaften, insbesondere Zugeigenschaften und Kratzfestigkeiten, aufweisen.

Ein weiterer Nachteil der im Stand der Technik beschriebenen, mit Füllstoffen modifizierten Komposite sind deren für viele Anwendungen unzureichenden mechanischen Eigenschaften.

Aufgabe der vorliegenden Erfindung ist es, die Nachteile des Standes der Technik zu überwinden.

Insbesondere Aufgabe der Erfindung ist es, ein Komposit zur Verfügung zu stellen, das im Vergleich zu Kompositen aus dem Stand der Technik deutlich verbesserte Biegemodule, Biegefestigkeiten, Zugmodule, Zugfestigkeiten, Risszähigkeiten, Bruchzähigkeiten, Schlagzähigkeiten und Verschleißraten besitzt.

Durch verbesserte mechanische Eigenschaften können dünnere Bauteile realisiert werden. Dies kann maßgeblich zur Gewichtseinsparung im Automobil- sowie im Flugzeug- und Raumfahrtbereich beitragen. Zu den Anwendungen gehören beispielsweise Stoßfänger oder Innenverkleidungen in Zügen aber auch Flugzeugen aus duroplastischen Formmassen. Hohe Zugfestigkeiten müssen vor allem bei Klebstoffen realisiert werden. Anwendungen für elastomere Kunststoffe, beispielsweise auf der Grundlage von Polymeren wie Styrol-Butadien-Kautschuk (SBR), sind u. a. Dichtungen und Schwingungsdämpfer.

Überraschenderweise wurde die Aufgabe durch erfindungsgemäße Komposite mit den Merkmalen des Hauptanspruchs gelöst. Vorzugsweise Ausgestaltungen sind in den Unteransprüchen charakterisiert.

Überraschenderweise wurden auch bei der Verwendung von gefälltem, oberflächenmodifiziertem Titandioxid mit Kristallitgrößen d₅₀ kleiner 350 nm (gemessen nach dem Debye-Scherrer-Verfahren) die mechanischen und tribologischen Eigenschaften von Polymer-Kompositen stark verbessert. Erstaunlicherweise wirkt sich eine physikalische Bindung zwischen Partikel und Matrix besonders günstig auf die Verbesserung der mechanischen und tribologischen Eigenschaften des Komposits aus.

Das erfindungsgemäße Komposit enthält eine polymere Matrix und 0,1 bis 60 Gew.-% gefällten Titandioxidpartikeln mit einer mittleren Kristallitgrößen d₅₀ kleiner 350 nm (gemessen nach dem Debye-Scherrer-Verfahren). Bevorzugt beträgt die Kristallitgröße d₅₀ weniger als 200 nm, besonders bevorzugt 3 bis 50 nm. Die Titandioxidpartikel können sphärische oder stäbchenförmige Morphologie besitzen.

Weiterhin können die erfindungsgemäßen Komposite dem Fachmann an sich bekannte Bestandteile enthalten, beispielsweise mineralische Füllstoffe, Glasfasern, Stabilisatoren, Prozessadditive ((auch protective systems genannt) z. B. Dispergierhilfen, Trennmittel, Antioxidantien, Antiozonantien u.a.), Pigmente, Flammschutzmittel (z. B. Aluminiumhydroxid, Antimontrioxid, Magnesiumhydroxid" u. a.), Vulkanisationsbeschleuniger, Vulkanisationsverzögerer, Zinkoxid, Stearinsäure, Schwefel, Peroxid und/oder Weichmacher.

Ein erfindungsgemäßes Komposit kann beispielsweise zusätzlich bis zu 80 Gew.-%, vorzugsweise 10 bis 80 Gew.-%, mineralische Füllstoffe und/oder Glasfasern, bis zu 10 Gew.-%, vorzugsweise 0,05 bis 10 Gew.-% Stabilisatoren und Prozessadditive (z. B. Dispergierhilfen, Trennmittel, Antioxidantien, u. a.), bis zu 10 Gew.-% Pigment und bis zu 40 Gew.-% Flammschutzmittel (z. B. Aluminiumhydroxid, Antimontrioxid, Magnesiumhydroxid" u. a.) enthalten.

Ein erfindungsgemäßes Komposit kann beispielsweise 0,1 bis 60 Gew.-% Titandioxid, 0 bis 80 Gew.-% mineralische Füllstoffe und/oder Glasfasern, 0,05 bis 10 Gew.-% Stabilisatoren und Prozessadditive (z. B. Dispergierhilfen, Trennmittel, Antioxidantien, u. a.), 0 bis 10 Gew.-% Pigment, 0 bis 40 Gew.-% Flammschutzmittel (z. B. Aluminiumhydroxid, Antimontrioxid, Magnesiumhydroxid, u. a.) enthalten.

Die polymere Matrix kann aus einem Elastomer oder einem Duromer bestehen. Beim Elastomer kann es sich beispielsweise um Naturkautschuk (NR), Isopren-Kautschuk (IR), Butyl-Kautschuk (CIIR, BIIR), Butadien-Kautschuk (BR), Styrol-Butadien-Kautschuk (SBR), Acrylnitril-Butadien-Kautschuk (NBR), Brombutyl-Kautschuk (BIIR), Styrol-Butadien-Isopren-Kautschuk (SBIR), Chloropren-Kautschuk (CR), chlorsulfonierter Polyethylen-Kautschuk (CSM), hydrierter NBR-Kautschuk (HNBR), Polymethylsiloxan-Vinyl-Kautschuk (VMQ), Acrylat-Ethylen-Kautschuk (AEM), Acrylat-Kautschuk (ACM), Fluor-Kautschuk (FKM), Fluorsilikon-Kautschuk (FVMQ), thermoplastischen Elastomeren (TPE), thermoplastischen Elastomeren (TPE) auf Basis von Polyamid (TPA), auf Basis von Copolyestern (TPC), auf Basis von Olefinen (TPO), auf Basis von Styrol (TPS), auf Basis von Polyurethan (TPU), auf Basis von vernetztem Kautschuk (TPV) oder Mischungen von mindestens zwei dieser Kunststoffe handeln. Als Duromere sind beispielsweise ungesättigte Polyesterharze (UP), Phenolharze, Melaminharze, Formaldehyd-Formassen, Vinylester-Harze, Diallylphthalat-Harze, Silikonharze oder Harnstoffharze geeignet. Besonders geeignet von den Duromeren sind UP-Harze.

Das erfindungsgemäße Komposit kann 0,1 bis 60 Gew.-% gefälltes, oberflächenmodifiziertes Titandioxid, 0 bis 80 Gew.-% mineralische Füllstoffe und/oder Glasfasern, 0,05 bis 10 Gew.-% Stabilisatoren und Prozessadditive (z. B. Dispergierhilfen, Trennmittel, Antioxidantien, u. a.), 0 bis 10 Gew.-% Pigment, 0 bis 40 Gew.-% Flammschutzmittel (z. B. Aluminiumhydroxid, Antimontrioxid, Magnesiumhydroxid, u. a.) enthalten.

Erfindungsgemäß können ultrafeine Titandioxidpartikel eingesetzt werden, die eine anorganische und/oder eine organische Oberflächenmodifizierung besitzen.

Die anorganische Oberflächenmodifizierung des ultrafeinen Titandioxids besteht typischerweise aus Verbindungen, die mindestens zwei der folgenden Elemente enthalten: Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen bzw. Salzen. Beispielhaft genannt seien Natriumsilikat, Natriumaluminat und Aluminiumsulfat..

Die anorganische Oberflächenbehandlung des ultrafeinen Titandioxids findet in wässriger Aufschlämmung statt. Die Reaktionstemperatur soll dabei vorzugsweise 50°C nicht übersteigen. Der pH-Wert der Suspension wird, beispielsweise unter Verwendung von NaOH auf pH-Werte im Bereich größer 9 eingestellt. Unter starkem Rühren werden dann die Nachbehandlungschemikalien (anorganische Verbindungen), vorzugsweise wasserlösliche anorganische Verbindungen wie beispielsweise Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salze zugegeben. Der pH-Wert und die Mengen an Nachbehandlungschemikalien werden erfindungsgemäß so gewählt, dass letztere vollständig in Wasser gelöst vorliegen. Die Suspension wird intensiv gerührt, so dass sich die Nachbehandlungschemikalien homogen in der Suspension verteilen, vorzugsweise für mindestens 5 Minuten. Im nächsten Schritt wird der pH-Wert der Suspension abgesenkt. Als vorteilhaft hat sich dabei erwiesen, den pH-Wert langsam und unter starkem Rühren abzusenken. Besonders vorteilhaft wird der pH-Wert innerhalb von 10 bis 90 Minuten auf Werte von 5 bis 8 abgesenkt. Im Anschluss daran schließt sich erfindungsgemäß eine Reifezeit, vorzugsweise eine Reifezeit von etwa einer Stunde an. Die Temperaturen sollen dabei vorzugsweise 50°C nicht überschreiten. Die wässrige Suspension wird dann gewaschen und getrocknet. Zur Trocknung des ultrafeinem, oberflächenmodifizierten Titandioxids bieten sich beispielsweise die Sprühtrocknung, die Gefriertrocknung und/oder die Mahltrocknung an. Abhängig vom Trocknungsverfahren kann eine anschließende Mahlung der getrockneten Pulver notwendig sein. Die Mahlung kann nach an sich bekannten Verfahren durchgeführt werden.

Erfindungsgemäß sind folgende Verbindungen als organische Oberflächenmodifikatoren besonders geeignet: Polyether, Silane, Polysiloxane, Polycarbonsäuren, Fettsäuren, Polyethylenglykole, Polyester, Polyamide, Polyalkohole, organische Phosphonsäuren, Titanate, Zirkonate, Alkyl- und/oder Arylsulfonate, Alkyl- und/oder Arylsulfate, Alkyl- und/oder Arylphosphorsäureester.

Die Herstellung von organisch obertlächenmodifiziertem Titandioxid kann nach an sich bekannten Verfahren durchgeführt werden. Dabei handelt es sich zum einen um die Oberflächenmodifizierung in wässriger oder lösemittelhaltiger Phase. Zum anderen kann die organische Komponente durch direktes Aufsprühen und anschließendes Mischen/Mahlen auf die Partikeloberfläche aufgebracht werden.

Erfindungsgemäß werden geeignete organische Verbindungen unter starkem Rühren und/oder während einer Dispergierung zu einer Titandioxid-Suspension gegeben. Dabei werden die organischen Modifizierungen über Chemisorption/Physisorption an die Partikeloberfläche gebunden.

Als organische Verbindungen eignen sich besonders Verbindungen ausgewählt aus der Gruppe der Alkyl- und/oder Arylsulfonate, Alkyl- und/oder Arylsulfate, Alkyl- und/oder Arylphosphorsäureester oder Mischungen aus mindestes zwei dieser Verbindungen, wobei die Alkyl- oder Arylreste durch funktionelle Gruppen substituiert sein können. Auch können die organischen Verbindungen Fettsäuren sein, die ggf. funktionelle Gruppen besitzen. Auch Mischungen aus mindestens zwei solcher Verbindungen können eingesetzt werden.

Beispielsweise eingesetzt werden: Alkylsulfonsäuresalz, Natriumpolyvinylsulfonat, Natrium-N-alkyl-benzolsulfonat, Natriumpolystyrolsulfonat, Natriumdodecylbenzolsulfonat, Natriumlaurylsulfat, Natriumcetylsulfat, Hydroxylaminsulfat, Triethanolammoniumlaurylsulfat, Phosphorsäuremonoethylmonobenzylester, Lithiumperfluoroctansulfonat, 12-Brom-1-dodecansulfonsäure, Natium-10-hydroxy-1-decansulfonat, Natrium-Carrageenan, Natrium-10-Mercapto-1-Cetansulfonat, Natrium-16-Ceten(1)-sulfat, Oleylcetylalkoholsulfat, Ölsäuresulfat, 9,10-Dihydroxystearinsäure, Isostearinsäure, Stearinsäure, Ölsäure.

Das organisch modifizierte Titandioxid kann entweder direkt in Form der vorliegenden wässrigen Paste eingesetzt oder vor der Anwendung getrocknet werden. Die Trocknung kann nach an sich bekannten Verfahren durchgeführt werden. Für die Trocknung bietet sich insbesondere der Einsatz von Konvektionstrocknern, Sprühtrocknern, Mahltrocknern, Gefriertrocknern und/oder Pulsationstrocknern an. Andere Trockner sind jedoch erfindungsgemäß ebenso einsetzbar. Abhängig vom Trocknungsverfahren kann eine anschließende Mahlung der getrockneten Pulver notwendig sein. Die Mahlung kann nach an sich bekannten Verfahren durchgeführt werden.

Erfindungsgemäß haben die oberflächenmodifizierten Titandioxidpartikel optional ein oder mehrere funktionelle Gruppen, beispielsweise eine oder mehrere Hydroxy-, Amino-, Carboxyl-, Epoxy-, Vinyl-, Methacrylat- und/oder Isocyanat-Gruppen, Thiole, Alkylthiocarboxylate, Di- und/oder polysulfidische Gruppen.

Bevorzugt sind Oberflächenmodifikatoren, die über eine funktionelle Gruppe an die Titandioxidpartikel gebunden sind und über eine andere funktionelle Gruppe mit der polymeren Matrix wechselwirken.

Die Oberflächenmodifikatoren können chemisch und/oder physikalisch an die Partikeloberfläche gebunden sein. Die chemische Bindung kann kovalent oder ionisch sein. Als physikalische Bindung sind Dipol-Dipol- oder Van-der-Waals-Bindungen möglich. Bevorzugt ist die Anbindung der Oberflächenmodifikatoren über kovalente Bindungen oder über physikalische Dipol-Dipol-Bindungen.

Erfindungsgemäß besitzen die oberflächenmodifizierten Titandioxidpartikel die Fähigkeit, über die Oberflächenmodifikatoren teilweise oder ganz eine chemische und/oder physikalische Bindung zur polymeren Matrix einzugehen. Als chemische Bindungsarten sind kovalente und ionische Bindungen geeignet. Als physikalische Bindungsarten sind Dipol-Dipol- und Van-der-Waals-Bindungen geeignet.

Vorzugsweise kann zur Herstellung des erfindungsgemäßen Komposits zunächst ein Masterbatch hergestellt werden, der vorzugsweise 5 - 80 Gew. % Titandioxid enthält. Dieses Masterbatch kann dann entweder nur mit dem Rohpolymer verdünnt oder mit den weiteren Bestandteilen der Rezeptur vermischt und ggf. nochmals dispergiert werden.

Zur Herstellung des erfindungsgemäßen Komposits kann auch ein Verfahren gewählt werden, wobei das Titandioxid zunächst in organischen Substanzen insbesondere in Aminen, Polyolen, Styrolen, Formaldehyden und dessen Formmassen, Vinylestern-Harzen, Polyesterharzen oder Silikonharzen eingearbeitet und dispergiert wird. Diese mit Titandioxid versetzten organischen Substanzen können dann als Ausgangsmaterial für die Komposit-Herstellung genutzt werden.

Zur Dispergierung vom Titandioxid im Masterbatch können übliche Dispergierverfahren, insbesondere unter Verwendung von Schmelzeextrudern, Dissolvern, Dreiwalzen, Kugelmühlen, Perlmühlen, Tauchmühlen, Ultraschall oder Knetern verwendet werden. Besonders vorteilhaft ist die Verwendung von Tauchmühlen oder Perlmühlen mit Perlendurchmessern von d < 1,5 mm.

Das erfindungsgemäße Komposit hat überraschenderweise herausragende mechanische und tribologische Eigenschaften. Im Vergleich zum ungefüllten Polymer haben die erfindungsgemäßen Komposite deutlich verbesserte Biegemodule, Biegefestigkeiten, Zugmodule, Zugfestigkeiten, Risszähigkeiten, Bruchzähigkeiten, Schlagzähigkeiten und Verschleißraten.

Gegenstand der Erfindung sind im Einzelnen:
- Komposite bestehend aus mindestens einem Elastomer und/oder mindestens einem Duromer und einem gefällten, oberflächenmodifiziertem Titandioxid, dessen Kristallitgröße d₅₀ kleiner 350 nm, bevorzugt kleiner 200 nm ist und besonders bevorzugt zwischen 3 und 50 nm beträgt und wobei das Titandioxid sowohl anorganisch und/oder organisch oberflächenmodifiziert sein kann (nachfolgend auch Titandioxid-Komposite genannt);
- Titandioxid-Komposite, wobei als Duromer ein ungesättigtes Polyesterharz (UP), ein Phenolharz, ein Melaminharz, eine Formaldehyd-Formmasse, ein Vinylester-Harz, ein Diallylphthalat-Harz oder ein Harnstoffharz, vorzugsweise ein UP-Harz, eingesetzt wird;
- Titandioxid-Komposite, wobei als Elastomer Naturkautschuk (NR), Isopren-Kautschuk (IR), Butyl-Kautschuk (CIIR, BIIR), Butadien-Kautschuk (BR), Styrol-Butadien-Kautschuk (SBR), Acrylnitril-Butadien-Kautschuk (NBR), Brombutyl-Kautschuk (BIIR), Styrol-Butadien-Isopren-Kautschuk (SBIR), Chloropren-Kautschuk (CR), chlorsulfonierter Polyethylen-Kautschuk (CSM), hydrierter NBR-Kautschuk (HNBR), Polymethylsiloxan-Vinyl-Kautschuk (VMQ), Acrylat-Ethylen-Kautschuk (AEM), Acrylat-Kautschuk (ACM), Fluor-Kautschuk (FKM), Fluorsilikon-Kautschuk (FVMQ), thermoplastischen Elastomeren (TPE), thermoplastischen Elastomeren (TPE) auf Basis von Polyamid (TPA), auf Basis von Copolyestern (TPC), auf Basis von Olefinen (TPO), auf Basis von Styrol (TPS), auf Basis von Polyurethan (TPU), auf Basis von vernetztem Kautschuk (TPV) oder Mischungen von mindestens zwei dieser Kunststoffe eingesetzt wird;
- Titandioxid-Komposite, wobei das Komposit 20 bis 99,8 Gew.-% Duromer, 0,1 bis 60 Gew.-% gefälltes, oberflächenmodifiziertes Titandioxid, 0 bis 80 Gew.-% mineralischen Füllstoff und/oder Glasfaser, 0,05 bis 10 Gew.-% Prozessadditive, 0 bis 10 Gew.-% Pigment, und 0 bis 40 Gew.-% Aluminiumhydroxid enthält;
- Titandioxid-Komposite, wobei das Komposit 100 phr Elastomer, 0,1 bis 300 phr gefälltes, oberflächenmodifiziertes Titandioxid, 0 bis 10 phr Vulkanisationsbeschleuniger, 0 bis 10 phr Vulkanisationsverzögerer, 0 bis 20 phr Zinkoxid, 0 bis 10 phr Stearinsäure, 0 bis 20 phr Schwefel und/oder Peroxid, 0 bis 300 phr mineralischen Füllstoff, 0 bis 200 phr Weichmacher, 0 bis 30 phr protective system, enthaltend vorzugsweise Antioxidantien und Antiozonantien; enthält,
- Titandioxid-Komposite, wobei der Anteil von gefälltem, oberflächenmodifiziertem Titandioxid im Komposit 0,1 bis 60 Gew.-%, bevorzugt 0,5 bis 30 Gew.-%, besonders bevorzugt 1,0 bis 20 Gew.-%, beträgt;
- Titandioxid-Komposite, wobei die anorganische Oberflächenmodifizierung des ultrafeinen Titandioxids aus einer Verbindung besteht, die mindestens zwei der folgenden Elemente enthält: Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen bzw. Salzen. Beispielhaft genannt seien Natriumsilikat, Natriumaluminat und Aluminiumsulfat;
- Titandioxid-Komposite, wobei die organische Oberflächenmodifizierung aus einem oder mehreren der folgenden Bestandteile besteht: Polyether, Silane, Siloxane, Polysiloxane, Polycarbonsäuren, Polyester, Polyamide, Polyethylenglykole, Polyalkohole, Fettsäuren, bevorzugt ungesättigte Fettsäuren, Polyacrylate, organische Phosphonsäuren, Titanate, Zirkonate, Alkyl- und/oder Arylsulfonate, Alkyl- und/oder Arylsulfate, Alkyl- und/oder Arylphosphorsäureester;
- Titandioxid-Komposite, wobei die Oberflächenmodifizierung eine oder mehrere der folgenden funktionellen Gruppen enthält: Hydroxyl-, Amino-, Carboxyl-, Epoxy-, Vinyl-, Methacrylat-, und/oder Isocyanat-Gruppen, Thiole, Alkylthiocarboxylate, Di- und/oder polysulfidische Gruppen;
- Titandioxid-Komposite, wobei die Oberflächenmodifizierung kovalent an die Partikeloberfläche angebunden ist;
- Titandioxid-Komposite, wobei die Oberflächenmodifizierung ionisch an die Partikeloberfläche gebunden ist;
- Titandioxid-Komposite, wobei die Oberflächenmodifizierung über physikalische Wechselwirkungen an die Partikeloberfläche gebunden ist;
- Titandioxid-Komposite, wobei die Oberflächenmodifizierung durch eine Dipol-Dipol- oder eine Van-der-Waals-Wechselwirkung an die Partikeloberfläche gebunden ist;
- Titandioxid-Komposite, wobei die oberflächenmodifizierten Titandioxidpartikel eine Bindung zur polymeren Matrix eingehen;
- Titandioxid-Komposite, wobei eine chemische Bindung zwischen den Titandioxidpartikeln und der polymeren Matrix vorliegt;
- Titandioxid-Komposite, wobei die chemische Bindung zwischen den Titandioxidpartikeln und der polymeren Matrix eine kovalente und/oder eine ionische Bindung ist;
- Titandioxid-Komposite, wobei eine physikalische Bindung zwischen den Titandioxidpartikeln und der polymeren Matrix vorliegt;
- Titandioxid-Komposite, wobei die physikalische Bindung zwischen den Titandioxidpartikeln und der polymeren Matrix eine Dipol-Dipol-Bindung (Keeson), eine induzierte Dipol-Dipol-Bindung (Debye) oder eine dispersive Bindung (Van-der-Waals) ist;
- Titandioxid-Komposite, wobei eine physikalische und eine chemische Bindung zwischen den Titandioxidpartikeln und der polymeren Matrix vorliegen;
- Verfahren zur Herstellung der Titandioxid-Komposite;
- Verfahren zur Herstellung der Titandioxid-Komposite, wobei zunächst ein Masterbatch hergestellt wird und das Titandioxid-Komposit durch Verdünnung des Masterbatches mit dem Rohpolymer erhalten wird, wobei das Masterbatch 5-80 Gew.-% Titandioxid, bevorzugt 15-60 Gew.-% Titandioxid enthält;
- Verfahren zur Herstellung der Titandioxid-Komposite, bei dem das Titandioxid enthaltende Masterbatch mit dem Rohpolymer verdünnt wird und sich vorzugsweise eine Dispergierung anschließt;
- Verfahren zur Herstellung der Titandioxid-Komposite, bei dem das Masterbatch mit den weiteren Bestandteile der Rezeptur in einem oder mehreren Schritten vermischt wird und sich vorzugsweise noch eine Dispergierung anschließt;
- Verfahren zur Herstellung der Titandioxid-Komposite, wobei das Titandioxid zunächst in organischen Substanzen insbesondere in Aminen, Polyolen, Styrolen, Formaldehyden und dessen Formmassen, Vinylestern-Harzen, Polyesterharzen oder Silikonharzen eingearbeitet und dispergiert wird;
- Verfahren zur Herstellung der Titandioxid-Komposite, wobei die mit Titandioxid versetzten organischen Substanzen als Ausgangsmaterial für die Komposit-Herstellung genutzt werden
- Verfahren zur Herstellung der Titandioxid-Komposite, wobei die Dispergierung des Titandioxids im Masterbatch mittels üblicher Dispergierverfahren, insbesondere unter Verwendung von Schmelzeextrudern, Dissolvern, Dreiwalzen, Kugelmühlen, Perlmühlen, Tauchmühlen, Ultraschall oder Knetern durchgeführt wird;
- Verfahren zur Herstellung der Titandioxid-Komposite, wobei für die Dispergierung des Titandioxids vorzugsweise Tauchmühlen oder Perlmühlen verwendet werden;
- Verfahren zur Herstellung der Titandioxid-Komposite, wobei für die Dispergierung des Titandioxids vorzugsweise Perlmühlen verwendet werden, wobei die Perlen vorzugsweise Durchmesser von d < 1,5 mm, besonders vorzugsweise von d < 1,0 mm, ganz besonders vorzugsweise von d < 0,3 mm besitzen;
- Titandioxid-Komposite, die verbesserte mechanische Eigenschaften und verbesserte tribologische Eigenschaften besitzen;
- Titandioxid-Komposite, bei denen gleichzeitig die Festigkeit und die Zähigkeit durch den Einsatz der oberflächenmodifizierten Titandioxidpartikel verbessert werden;
- Titandioxid-Komposite, bei denen die Verbesserung der Festigkeit und Zähigkeit in einem Biegeversuch oder einem Zugversuch beobachtet werden können;
- Titandioxid-Komposite, die verbesserte Schlagzähigkeiten und/oder Kerbschlagzähigkeiten besitzen;
- Titandioxid-Komposite, bei denen die Verschleißfestigkeit durch den Einsatz der oberflächenmodifizierten Titandioxidpartikel verbessert wird;
- Titandioxid-Komposite, bei denen die Kratzfestigkeit durch den Einsatz der oberflächenmodifizierten Titandioxidpartikel verbessert wird;
- Titandioxid-Komposite, bei denen die Spannungsrissbeständigkeit durch den Einsatz der oberflächenmodifizierten Titandioxidpartikel verbessert wird;
- Titandioxid-Komposite, bei denen eine Verbesserung der Kriechbeständigkeit beobachtet werden kann;
- Titandioxid-Komposite, bei denen das viskoelastische Verhalten, charakterisiert über den Verlustfaktor tan δ, verbessert wird;
- Verwendung der Titandioxid-Komposite für Bauteile für den Automobil-, Luftfahrt- oder den Raumfahrt-Bereich insbesondere zur Gewichtseinsparung, beispielsweise in Form von Stoßfängern oder Innenverkleidungen;
- Verwendung der Titandioxid-Komposite insbesondere in Form von Dichtungen oder Schwingungsdämpfern.

Die Erfindung wird durch die nachfolgenden Beispiele erläutert, ohne sie darauf einzuschränken.

### Beispiel 1

Das anorganisch-nachbehandelte und oberflächenmodifizierte Titandioxid wird mit einer Perlmühle zu 25 Gew.-% in das UP-Harz Palapreg P17-02 eindispergiert bis auf dem Hegmann-Keil eine Feinheit kleiner als 5 µm vorliegt.

Hergestellt werden kann das anorganisch-nachbehandelte und oberflächenmodifizierte Titandioxid beispielsweise auf folgende Weise:
3,7 kg einer 6,5 Gew.-%igen wässrigen Suspension ultrafeiner Titandioxid-Partikel mit mittleren Primärpartikeldurchmessern d₅₀ von 14 nm (Ergebnis von TEM-Untersuchungen) werden unter Rühren auf eine Temperatur von 40°C erhitzt. Mit 10%iger Natronlauge wird der pH-Wert der Suspension auf 12 eingestellt. Unter starkem Rühren werden gleichzeitig 14,7 ml einer wässrigen Natriumsilikatlösung (284 g SiO₂/L), 51,9 ml einer Aluminiumsulfat-Lösung (mit 75 g Al₂O₃/L) und 9,7 ml einer Natriumaluminat-Lösung (275 g Al₂O₃/L) unter Einhaltung des pH-Wertes von 12,0 zur Suspension gegeben. Die Suspension wird für weitere 10 Minuten unter starkem Rühren homogenisiert. Anschließend wird der pH-Wert langsam, vorzugsweise innerhalb von 60 Minuten, durch Zugabe einer 5 %igen Schwefelsäure auf einen pH-Wert von 7,5 eingestellt. Es schließt sich eine Reifezeit von 10 Minuten bei ebenfalls einer Temperatur 40°C an. Die Reaktionssuspension wird filtriert und der resultierende Filterkuchen mit VE-Wasser auf eine Leitfähigkeit kleiner 100 µS/cm gewaschen. Dieser Filterkuchen wird zu einer Suspension mit einem Feststoffgehalt von 20 Gew-% aufdispergiert. Der Suspension werden unter Dissolverdispergierung 15 g des 3Methacryloxypropyltrimethoxy-silan langsam zugegeben. Die Suspension wird anschließend für weitere 20 Minuten mit dem Dissolver dispergiert und im Sprühtrockner getrocknet.

**Tabelle 1: Rezeptur der glasfaserverstärkten Kunststoffe auf UP-Harz-Basis**

| Edukte | Hersteller | | Material-einwaage [g] |
|---|---|---|---|
| Palapreg P17-02* | BASF | 70 % | 31,08* |
| Palapreg H814-01 | DSM Composite Resins | 30 % | 13,32 |
| BYK W996 | BYK-Chemie GmbH | 1,5 phr | 0,67 |
| BYK P9060 | BYK-Chemie GmbH | 4 phr | 1,78 |
| Trigonox C | Akzo Nobel | 1,5 phr | 0,67 |
| Coathylene HA 1681 | Du Pont Polymer Powders | 1,5 phr | 0,67 |
| Luvatol MV 35 NV | Lehmann & Voss & Co | 3 phr | 1,33 |
| Millicarb OG | Omya GmbH | 50 phr | 22,20 |
| Martinal ON 921 | Martinswerk GmbH | 120 phr | 53,29 |
| Oberflächenmodifiziertes Titandioxid* | Sachtleben Chemie GmbH | 8,3 % | 10,36* |
| Glasfasern | Saint-Gobain Vetrolex | 25 % | 33,84 |

| | | | |
|---|---|---|---|
| * *als fertige Dispersion nach Perlmahlung demnach als Gesamteinwaage mit 41,44 g (Palapreg P17-02* + *oberflächenmodifiziertes Titandioxid) eingewogen* | | | |

Diese Dispersion wird laut Materialeinwaage in der Tabelle 1 mit dem weiteren Harz Palapreg H814-01 und den Additiven im Dissolver (Dissolverscheibe: Durchmesser 30 mm) bei 1500 U/Min. In einem 180 ml Kunststoffbecher gerührt und langsam mit steigender Drehzahl die erforderliche Einwaage an Füllstoffen zugegeben. Nach Beendigung der Füllstoffzugabe wird 3 Minuten bei 6500 U/Min. dispergiert.
Zur Rohmasse wird die erforderliche Menge an Glasfasern zugesetzt, die mit Hilfe eines Spatels untergehoben werden. Im Kneter wird dieses Gemisch für weitere 3 Minuten bei 50 U/Min. homogenisiert. Die entstehende Masse wird in ein mit Trennmittel imprägniertes Werkzeug mit 12 Aussparungen von 80 x 15 x 4 mm³ sorgfältig ausgebreitet geglättet. Als untere Pressplatte des Werkzeuges dient eine Teflonplatte, als obere Pressplatte eine polierte, verchromte Metallplatte. In der auf 150°C aufgeheizten Presse werden diese 3 Platten samt Papierschutz eine Minute bei 150 °C temperiert (bei normalem Schließen der Presse), danach werden die Platten mit einem Druck von 100 bar bei 150 °C verpresst. Nach dem Pressvorgang werden die Platten abkühlen gelassen und die Prüfkörper aus dem Werkzeug gedrückt.

### Beispiel 2

Die Prüfkörper aus Beispiel 1 werden in 3-Punkt-Biegeversuchen nach DIN EN ISO 178 und in Schlagzähigkeitsversuchen nach DIN EN ISO 179 untersucht. Die Ergebnisse sind in Tabelle 2 dargestellt.
Die erfindungsgemäßen Komposite zeigen im Vergleich zum Reinharz stark verbesserte Eigenschaften.

**Tabelle 2: Mechanischen Eigenschaften der hergestellten Prüfkörper**

| Probe | Elastizitätsmodul [MPa] | max. Biegespannung [MPa] | Bruchspannung [MPa] | rel. Dehnung beim Bruch [%] | Schlagzähigkeit [kJ/m²] |
|---|---|---|---|---|---|
| Komposit ohne Titandioxid | 11759 | 66,51 | 39,66 | 0,84 | 8,77 |
| Komposit mit 8,3% Titandioxid | 12124 | 67,48 | 41,28 | 0,77 | 9,97 |
| BMC mit 8,3% silansiertem (3% Silan) Titandioxid | 12700 | 85,00 | 66,37 | 0,94 | 9,94 |
| BMC mit 8,3% silanisiertem (10% Silan) Titandioxid | 13630 | 91,18 | 75,92 | 0,96 | 10,03 |

## Patentansprüche

1. Komposit aus Füllstoffen und Pigmenten in einer polymeren Matrix, die Titandioxid, mindestens ein Elastomer ausgewählt wird aus: Naturkautschuk (NR), Isopren-Kautschuk (IR), Butyl-Kautschuk (CIIR, BIIR), Butadien-Kautschuk (BR), Styrol-Butadien-Kautschuk (SBR), Acrylnitril-Butadien-Kautschuk (NBR), Brombutyl-Kautschuk (BIIR), Styrol-Butadien-Isopren-Kautschuk (SBIR), Chloropren-Kautschuk (CR), chlorsulfonierter Polyethylen-Kautschuk (CSM), hydrierter NBR-Kautschuk (HNBR), Polymethylsiloxan-Vinyl-Kautschuk (VMQ), Acrylat-Ethylen-Kautschuk (AEM), Acrylat-Kautschuk (ACM), Fluor-Kautschuk (FKM), Fluorsilikon-Kautschuk (FVMQ), thermoplastischen Elastomeren (TPE), thermoplastischen Elastomeren (TPE) auf Basis von Polyamid (TPA), auf Basis von Copolyestern (TPC), auf Basis von Olefinen (TPO), auf Basis von Styrol (TPS), auf Basis von Polyurethan (TPU), auf Basis von vernetztem Kautschuk (TPV) oder dass als Elastomer Mischungen von mindestens zwei dieser Elastomere ausgewählt werden, wobei das Komposit 100 phr Elastomer, 0,1 bis 300 phr Titandioxid, 0 bis 10 phr Vulkanisationsbeschleuniger, 0 bis 10 phr Vulkanisationsverzögerer, 0 bis 20 phr Zinkoxid, 0 bis 10 phr Stearinsäure, 0 bis 20 phr Schwefel und/oder Peroxid, 0 bis 300 phr mineralischen Füllstoff, 0 bis 200 phr Weichmacher, 0 bis 30 phr protective system, enthaltend vorzugsweise Antioxidantien und Antiozonantien; enthält und/oder mindestens ein Duromer, wobei als Duromer mindestens ein ungesättigtes Polyesterharz (UP), ein Phenolharz, ein Melaminharz, eine Formaldehyd-Formmasse, ein Vinylester-Harz, ein Diallylphthalat-Harz, ein Silikonharz und/oder ein Harnstoffharz, vorzugsweise ein UP-Harz ausgewählt wird, und das Komposit 20 bis 99,8 Gew.-% Duromer, 0,1 bis 60 Gew.-% Titandioxid, 0 bis 80 Gew.-% mineralischen Füllstoff und/oder Glasfaser, 0,05 bis 10 Gew.-% Prozessadditive, 0 bis 10 Gew.-% Pigment, und 0 bis 40 Gew.-% Aluminiumhydroxid enthält sowie die Kristallitgröße des Titandioxids d₅₀ zwischen 3 und 50 nm beträgt, **dadurch gekennzeichnet, dass** und das Titandioxid sowohl anorganisch mit wasserlöslichen Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salzen und organisch mit Silanen, Siloxanen, Polysiloxanen, Polycarbonsäuren, Polyestern, Polyethern, Polyamiden, Polyethylenglykolen, Polyalkoholen, Fettsäuren, bevorzugt ungesättigte Fettsäuren, Polyacrylaten, organische Phosphonsäuren, Titanaten, Zirkonaten, Alkyl- und/oder Arylsulfonaten, Alkyl- und/oder Arylsulfaten, Alkyl- und/oder Arylphosphorsäureestern oberflächenmodifiziert ist.

2. Komposit gemäß Anspruch 1, **dadurch gekennzeichnet, dass** die oberflächenmodifizierten Titandioxidpartikel eine Bindung zur polymeren Matrix eingehen.

3. Verfahren zur Herstellung eines Komposits gemäß Anspruch 1 oder 2, **dadurch gekennzeichnet, dass** aus dem Titandioxid und einem Teil des Rohpolymers ein Masterbatch hergestellt wird und das Komposit durch Verdünnung des Masterbatches mit dem Rohpolymer unter Dispergierung erhalten wird;

4. Verfahren gemäß Anspruch 3, **dadurch gekennzeichnet, dass** aus dem Titandioxid und einem Teil des Rohpolymers ein Masterbatch hergestellt wird und das Komposit durch Verdünnung des Masterbatches mit dem Rohpolymer erhalten wird, wobei der Masterbatch 5-80 Gew.-% Titandioxid, bevorzugt 15-60 Gew.-% Titandioxid enthält.

5. Verfahren gemäß Anspruch 3 oder 4, **dadurch gekennzeichnet, dass** das Masterbatch mit den weiteren Bestandteile der Rezeptur in einem oder mehreren Schritten vermischt wird und sich vorzugsweise eine Dispergierung anschließt.

6. Verfahren gemäß einem oder mehreren der Ansprüche 3 bis 5, **dadurch gekennzeichnet, dass** das Titandioxid zunächst in organischen Substanzen, insbesondere in Aminen, Polyolen, Styrolen, Formaldehyden und dessen Formmassen, Vinylestern-Harzen, Polyesterharzen oder Silikonharzen eingearbeitet und dispergiert wird.

7. Verfahren gemäß einem oder mehreren der Ansprüche 3 bis 6, **dadurch gekennzeichnet, dass** die Dispergierung des Titandioxids vorzugsweise in Tauchmühlen oder Perlmühlen durchgeführt wird.

8. Verfahren gemäß einem oder mehreren der Ansprüche 3 bis 7, **dadurch gekennzeichnet, dass** die Dispergierung des Titandioxids in Perlmühlen durchgeführt wird, wobei Perlen mit Durchmessern von d < 1,5 mm, besonders bevorzugt von d < 1,0 mm, ganz besonders bevorzugt von d < 0,3 mm eingesetzt werden.

9. Verwendung eines Komposits gemäß Anspruch 1 oder 2 für Bauteile für den Automobil-, Luftfahrt- oder den Raumfahrt-Bereich insbesondere zur Gewichtseinsparung, beispielsweise in Form von Stoßfängern oder Innenverkleidungen.

10. Verwendung eines Komposits gemäß Anspruch 1 oder 2 für Dichtungen oder Schwingungsdämpfer.

## Claims

1. Composite consisting of fillers and pigments in a polymer matrix which [*contains*] titanium dioxide, at least one elastomer is selected from the following:
natural rubber (NR), isoprene rubber (IR), butyl rubber (CIIR, BIIR), butadiene rubber (BR), styrene-butadiene rubber (SBR), acrylonitrile-butadiene rubber (NBR), bromobutyl rubber (BIIR), styrene-butadiene-isoprene rubber (SBIR), chloroprene rubber (CR), chlorosulphonated polyethylene rubber (CSM), hydrogenated NBR rubber (HNBR), polymethyl-siloxane-vinyl rubber (VMQ), acrylate-ethylene rubber (AEM), acrylate rubber (ACM), fluoro rubber (FKM), fluorosilicone rubber (FVMQ), thermoplastic elastomers (TPE), thermoplastic elastomers (TPE) based on polyamide (TPA), based on copolyesters (TPC), based on olefins (TPO), based on styrene (TPS), based on polyurethane (TPU), based on vulcanised rubber (TPV), or that mixtures of at least two of these elastomers are selected as the elastomer, wherein the composite contains 100 phr of elastomer, 0.1 to 300 phr of titanium dioxide, 0 to 10 phr of vulcanisation accelerator, 0 to 10 phr of vulcanisation retarder, 0 to 20 phr of zinc oxide, 0 to 10 phr of stearic acid, 0 to 20 phr of sulphur and/or peroxide, 0 to 300 phr of mineral filler, 0 to 200 phr of plasticiser, 0 to 30 phr of protective systems, preferably containing antioxidants and anti-ozonants, and/or at least one thermoset, wherein at least one unsaturated polyester resin (UP), phenolic resin, melamine resin, formaldehyde moulding composition, vinyl ester resin, diallyl phthalate resin, silicone resin and/or urea resin, preferably a UP resin, is selected as the thermoset, and the composite contains 20 to 99.8 wt.% of thermoset, 0.1 to 60 wt.% of titanium dioxide, 0 to 80 wt.% of mineral filler and/or glass fibre, 0.05 to 10 wt.% of process additives, 0 to 10 wt.% of pigment and 0 to 40 wt.% of aluminium hydroxide, and also the crystallite size of the titanium dioxide d₅₀ amounts to between 3 and 50 nm, **characterised in that** and the titanium dioxide is both inorganically surface-modified with water-soluble aluminium, antimony, barium, calcium, cerium, chlorine, cobalt, iron, phosphorus, carbon, manganese, oxygen, sulphur, silicon, nitrogen, strontium, vanadium, zinc, tin and/or zirconium compounds or salts and organically surface-modified with silanes, siloxanes, polysiloxanes, polycarboxylic acids, polyesters, polyethers, polyamides, polyethylene glycols, polyalcohols, fatty acids, preferably unsaturated fatty acids, polyacrylates, organic phosphonic acids, titanates, zirconates, alkyl and/or aryl sulphonates, alkyl and/or aryl sulphates, alkyl and/or aryl phosphoric acid esters.

2. Composite according to claim 1, **characterised in that** the surface-modified titanium dioxide particles bond with the polymer matrix.

3. Method for producing a composite according to claim 1 or 2, **characterised in that** a master batch is produced from the titanium dioxide and part of the crude polymer, and the composite is obtained by diluting the master batch with the crude polymer and dispersing it.

4. Method according to claim 3, **characterised in that** a master batch is produced from the titanium dioxide and part of the crude polymer, and the composite is obtained by diluting the master batch with the crude polymer, wherein the master batch contains 5 to 80 wt.% of titanium dioxide, preferably 15 to 60 wt.% of titanium dioxide.

5. Method according to claim 3 or 4, **characterised in that** the master batch is mixed with the other constituents of the formulation in one or more steps and a dispersion preferably follows.

6. Method according to one or more of claims 3 to 5, **characterised in that** the titanium dioxide is first incorporated into organic substances, in particular into amines, polyols, styrenes, formaldehydes and moulding compositions thereof, vinyl ester resins, polyester resins or silicone resins, and dispersed.

7. Method according to one or more of claims 3 to 6, **characterised in that** dispersion of the titanium dioxide is preferably performed in submills or bead mills.

8. Method according to one or more of claims 3 to 7, **characterised in that** dispersion of the titanium dioxide is performed in bead mills, wherein beads having diameters of d < 1.5 mm, particularly preferably d < 1.0 mm, most particularly preferably d < 0.3 mm, are used.

9. Use of a composite according to claim 1 or 2 for components for the automotive or aerospace sector, in particular for the purposes of weight reduction, for example in the form of bumpers or interior trim.

10. Use of a composite according to claim 1 or 2 for seals or vibration dampers.

## Revendications

1. Composite constitué de charges et de pigments au sein d'une matrice polymère, qui contient du dioxyde de titane, au moins un élastomère choisi parmi les suivants : caoutchouc naturel (NR), caoutchouc d'isoprène (IR), caoutchoucs butyl (CIIR, BIIR), caoutchouc de butadiène (BR), caoutchouc de styrène/butadiène (SBR), caoutchouc d'acrylonitrile/butadiène (NBR), caoutchouc butyl bromé (BIIR), caoutchouc de styrène/butadiène/isoprène (SBIR), caoutchouc de chloroprène (CR), caoutchouc polyéthylène chlorosulfoné (CSM), caoutchouc NBR hydrogéné (HNBR), caoutchouc poly(vinyl-méthyl-siloxane) (VMQ), caoutchouc d'acrylate/éthylène (AEM), caoutchouc d'acrylate (ACM), caoutchouc fluoré (FKM), caoutchouc silicone fluoré (FVMQ), élastomères thermoplastiques (TPE), élastomères thermoplastiques (TPE) à base de polyamide (TPA), à base de copolyesters (TPC), à base d'oléfines (TPO), à base de styrène (TPS), à base de polyuréthane (TPU) ou à base de caoutchouc réticulé (TPV), étant entendu que l'on peut choisir comme élastomère un mélange d'au moins deux de ces élastomères, le composite contenant 100 pcc (parties pour cent parties de caoutchouc) d'élastomère, 0,1 à 300 pcc de dioxyde de titane, 0 à 10 pcc d'accélérateur de vulcanisation, 0 à 10 pcc de retardateur de vulcanisation, 0 à 20 pcc d'oxyde de zinc, 0 à 10 pcc d'acide stéarique, 0 à 20 pcc de soufre et/ou de peroxyde, 0 à 300 pcc de charges minérales, 0 à 200 pcc de plastifiant, 0 à 30 pcc d'un système protecteur comprenant de préférence des antioxydants et des antiozonants, et/ou au moins un duromère, étant entendu qu'est choisi, en tant que duromère, au moins une résine polyester insaturé (UP), une résine phénolique, une résine de mélamine, une masse à mouler au formaldéhyde, une résine vinyl-ester, une résine à base de phtalate de diallyle, une résine de silicone et/ou une résine à base d'urée, et de préférence une résine UP, que le composite contient 20 à 99,8 % en poids de duromère, 0,1 à 60 % en poids de dioxyde de titane, 0 à 80 % en poids de charge minérale et/ou de fibres de verre, 0,05 à 10 % en poids d'adjuvants de procédé, 0 à 10 % en poids de pigment et 0 à 40 % en poids d'hydroxyde d'aluminium, et que la taille d₅₀ des cristallites de dioxyde de titane vaut de 3 à 50 nm,
**caractérisé en ce que** le dioxyde de titane est modifié en surface, aussi bien avec des composés inorganiques qui sont des sels ou des composés hydrosolubles d'aluminium, d'antimoine, de baryum, de calcium, de cérium, de chlore, de cobalt, de fer, de phosphore, de carbone, de manganèse, d'oxygène, de soufre, de silicium, d'azote, de strontium, de vanadium, de zinc, d'étain et/ou de zirconium, qu'avec des composés organiques qui sont des silanes, des siloxanes, des polysiloxanes, des polyacides carboxyliques, des polyesters, des polyéthers, des polyamides, des polyéthylèneglycols, des polyalcools, des acides gras et de préférence des acides gras insaturés, des polyacrylates, des acides phosphoniques organiques, des titanates, des zirconates, des alkyl-sulfonates et/ou aryl-sulfonates, des alkyl-sulfates et/ou aryl-sulfates, ou des esters d'acides alkyl-phosphoriques et/ou aryl-phosphoriques.

2. Composite conforme à la revendication 1, **caractérisé en ce que** les particules de dioxyde de titane modifiées en surface établissent des liaisons avec la matrice polymère.

3. Procédé de fabrication d'un composite conforme à la revendication 1 ou 2, **caractérisé en ce qu'**on prépare un mélange-maître à partir du dioxyde de titane et d'une partie du polymère brut, et qu'on obtient le composite en diluant le mélange-maître avec du polymère brut, tout en l'y dispersant.

4. Procédé conforme à la revendication 3, **caractérisé en ce qu'**on prépare un mélange-maître à partir du dioxyde de titane et d'une partie du polymère brut, et qu'on obtient le composite en diluant le mélange-maître avec du polymère brut, étant entendu que le mélange-maître contient de 5 à 80 % en poids de dioxyde de titane, et de préférence de 15 à 60 % en poids de dioxyde de titane.

5. Procédé conforme à la revendication 3 ou 4, **caractérisé en ce qu'**on ajoute au mélange-maître, en une ou plusieurs étapes, les autres constituants de la formulation, et que, de préférence, on y adjoint une opération de dispersion.

6. Procédé conforme à l'une ou plusieurs des revendications 3 à 5, **caractérisé en ce que** le dioxyde de titane est d'abord incorporé et dispersé dans des matières organiques, en particulier dans des amines, des polyols, des styrènes, des résines et des masses à mouler au formaldéhyde, des résines vinyl-esters, des résines de polyesters ou des résines de silicone.

7. Procédé conforme à l'une ou plusieurs des revendications 3 à 6, **caractérisé en ce que** la dispersion du dioxyde de titane est de préférence effectuée dans un broyeur à billes ou dans un broyeur à immersion.

8. Procédé conforme à l'une ou plusieurs des revendications 3 à 7, **caractérisé en ce que** la dispersion du dioxyde de titane est effectuée dans un broyeur à billes où les billes utilisées ont moins de 1,5 mm de diamètre, et en particulier, moins de 1,0 mm et mieux encore moins de 0,3 mm de diamètre.

9. Utilisation d'un composite, conforme à la revendication 1 ou 2, pour des pièces de structure de véhicules automobiles, aériens ou spatiaux, en particulier dans le but de réaliser des économies de poids, par exemple sous forme de pare-chocs ou de garnitures intérieures.

10. Utilisation d'un composite, conforme à la revendication 1 ou 2, pour des garnitures d'étanchéité ou des amortisseurs de vibrations.
